# EUROPEAN PATENT SPECIFICATION

(11) **EP 2 578 957 B1**
(45) Date of publication and mention of the grant of the patent: **28.06.2017**
(21) Application number: 12001823.9
(22) Date of filing: 17.03.2012
(51) Int. Cl.: F24F 13/02, F16L 11/02

(54) **Duct member comprising a guiding element**
Kanalelement mit einem Führungselement
Élément de conduit comprenant un élément de guidage

(30) Priority: 07.10.2011 CZ 201124938 U
(43) Date of publication of application: 10.04.2013
(73) Proprietor: Prihoda s.r.o., 53901 Hlinsko (CZ)
(72) Inventor: Bures, Michal, 53901 Hlinsko (CZ)
(74) Representative: Zemanová, Veronika

(56) References cited:
- EP-A1- 1 091 179
- WO-A1-2008/012564
- DE-U1- 29 602 119
- US-A1- 2006 240 765
- US-A1- 2007 092 374

## Description

### Field of art

The invention relates to a duct member for transportation and distribution of air, the duct member comprising a wall of a woven or nonwoven fabric or foil, wherein the wall is provided with a system of through holes for air passage.

### State of the art

Known air ducts for transportation and distribution of air made of woven or nonwoven fabric or foil, also called textile diffusers, are made of material sewn together forming closed shapes of different cross-sections. The cross-section is most likely circular but generally there is always a part of a circle, or a combination of several of such parts. Newly on the market there are textile ducts having rectangular or triangular cross- section, described for example in the utility model No. 216118.The duct is in a certain way pervious for air and in operation it is inflated by the air flow, and the air is distributed through the perforations or through the material. EP1091179A1 discloses an air duct according to the preamble of claim 1.

A certain disadvantage of the known air duct can occur, if for any reason after the installation it is necessary to adjust the amount of air distributed to the room. This can occur when there is an insufficient awareness of all environmental factors that directly affect the designed distribution and an additional final adjustment of the amount or of the direction of air is inevitable.

The goal of the invention is to develop a textile duct or a part of it, which allows regulating the air flow so that the distribution from the duct may be adapted to the real conditions of the ventilated area. At the same time the duct should keep the benefits of a textile duct, especially the possibility of washing in a washing machine.

### Summary of the invention

These goals are solved and these deficiencies largely eliminated by an air duct member for air transportation and distribution, which comprises a wall made of a woven or nonwoven fabric or a foil, wherein the wall is provided with a system of through holes for air passage. According to the invention the duct member further comprises at least one guiding element for guiding a regulating strip along at least some of the systems of holes for regulating the passability of the through holes.

Preferably, the guiding element is formed by a guiding strip made of a permeable or perforated or mesh material that is attached at the inside or outside of the duct member to the wall of the duct member so that a longitudinal guiding socket for guiding a regulating strip in the longitudinal direction of the duct member is formed.

The duct member further comprises a regulating strip arranged movably in the longitudinal direction of the duct member between the wall and the guiding element, wherein the regulating strip comprises regulating holes.

Preferably, the regulating holes are arranged in the regulating strip such that at least in one position of the regulating strip in respect to the wall of the duct member the regulating holes are aligned with the through holes.

According to an especially preferable embodiment the regulating strip and / or the guiding element and / or the wall of the duct member are provided with at least one locking element for locking the position of the regulating strip in respect to the wall of the duct member.

The duct member for air transport and distribution comprises a wall of a woven or nonwoven fabric or foil comprising a perforated part adapted for letting air through to the outside, wherein the duct member is provided further with an added movable layer of perforated foil or textile, which allows variation of air passage through the wall of the duct. The wall of the duct member consists of a double layer which is joined together e.g. by means sewing such in order to form a guiding means for an additional regulating layer - a regulating strip. All of the layers may be perforated. By shifting the intermediate layer the through holes get covered or uncovered, so that the air flow through such region is regulated. Various combinations of the perforations of the layers and of their mutual positions make it possible to control the necessary through flow of the distributed air precisely.

The material of the regulating strip may be the same as the material of the duct member, while the material is provided with rows of holes, through which air may pass. Form the functional point of view it is advantageous to use velcro for fixing the regulating strip.

Advantageously, the regulating strip may be provided along the whole length of the duct or at short sections only, directly along the perforated peripheral layers of the wall of the duct member. Advantageously, replaceable regulating strips may be used. In case a regulating strip has unsuitable holes, it may be removed from the guiding means and a another strip having a different structure or perforation may be inserted.

Another embodiment of the duct member is particularly suitable for being suspended under a ceiling and it comprises a connecting part for its connection to an air inlet and an extended part, in which through holes are arranged and which is closed by a bottom at a side opposite to the connecting part.

To provide good pressure conditions within such a duct member a conical transition part is arranged between the connecting part and the extended part.

Considering the stream exiting the duct member, it is advantageous to arrange the through holes in four to six groups, each of which comprises two rows of through holes, the rows extending in the longitudinal direction of the duct member, and the groups having an even mutual angular spacing.

To fix the position of the regulating strip better the extended part is at both of its ends provided with a fixing cuff, which may be turned from a working position in which it is adjacent to the wall of the duct member, to a setting position in which it is lifted from the wall of the duct member (10), and vice versa.

Preferably, the regulating strip is at its ends provided with handling strips for handling the regulating strip when adjusting its position.

The presented invention provides a very simple and in practice well applicable regulation of passage of airflow from a member of an air duct. The main advantage of the invention is the possibility to adjust air distribution according to actual local conditions.

### Brief description of the drawings

The invention is further explained by with respect to the drawings. Fig. 1 shows a duct member having a circular cross section according to this invention with an installed regulating strip. Fig. 2 shows in a detail the wall of the duct member in an area, in which the holes for passage of air are arranged. Fig. 3a, 3b and 3c show examples of regulation of the flow through the duct wall by means of covering the holes with the regulating strip. Fig. 4a and Fig. 4b show an axonometric view with partial section of another exemplary embodiment of the duct member according to the invention. Fig. 4a shows the adjusting position, in which the fixing cuffs are turned from the wall and Fig. 4b shows the working position, in which the regulating strips are fixed.

### Examples of the preferred embodiments

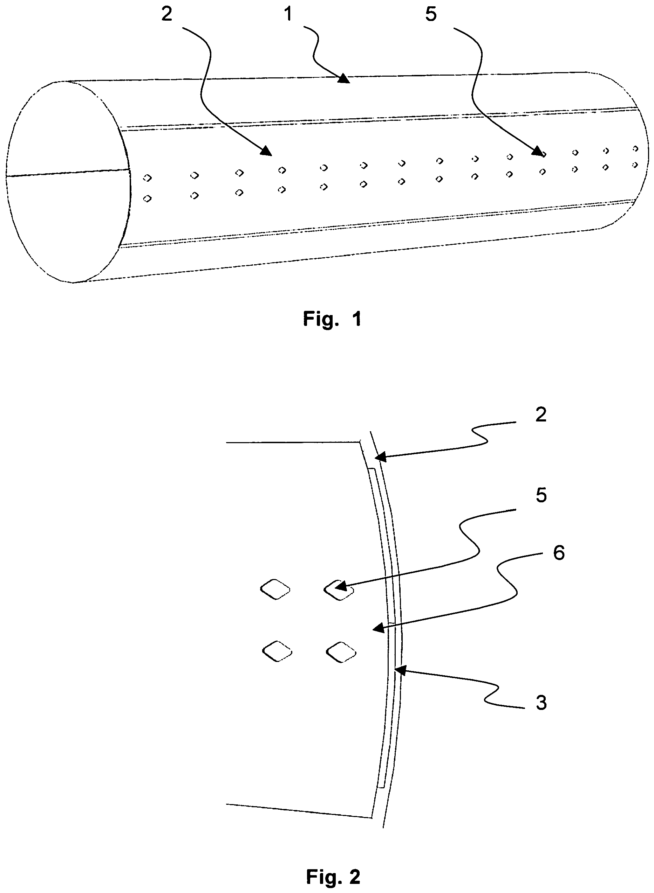

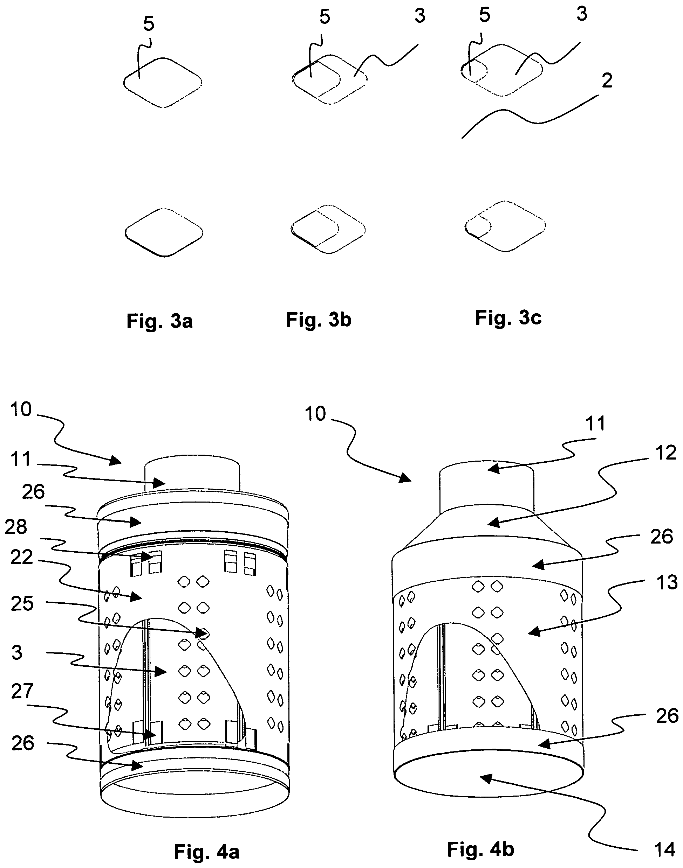

Figure 1 shows a duct member **1** of an air ducting for a transportation and distribution of air, the wall **2** of which is made of a woven fabric having a hose shape, in this case with a circular cross section. A part of the wall **2** of the duct member **1** is provided with through holes **5** for letting air out. An inner guiding element **6** having the form of a strip is sewn inside the duct member **1** along its longitudinal direction, the guiding element **6** comprising through holes, which are substantially aligned with the through holes **5** comprised in the wall **2** of the duct member **1**. A guiding socket is formed between the guiding element **6** and the adjacent wall **2** of the duct member **1** and there is a regulating strip **3** movably arranged within that guiding socket, the regulating strip **3** comprising regulating holes, while the regulating holes are arranged such that by shifting the regulating strip **3** inside the guiding socket in the longitudinal direction of the duct member **1,** the regulating holes get aligned with the through holes **5** or they get in a position, in which they are fully or partially covered by the material of the wall **2** of the duct member **1**, while the material of the regulating strip **3** fully or partially covers the through holes **5**. Figure 2 shows a detailed view of a part of the wall **2** of the duct member **1** with the through holes **5**, and the material layers in an area of the wall **2** comprising the through holes **5** are outlined. Behind the wall **2** the regulating strip **3** is arranged and behind the regulating strip **3** there is the guiding element **6** with holes, which are aligned with the through holes **5** in the wall **2**. The regulating strip **3** is shifted to a position in which the regulating holes are basically aligned with the through holes **5** in the wall **2**. Examples of mutual positions of the holes in the regulating strip **3** and the through holes **5** are shown in Figure 3a, 3b and 3c. Figure 3a shows a situation where the regulating holes are aligned with the through holes **5** and when the maximum output of air through the through holes **5** is allowed. Figure 3b shows a situation in which the regulating holes are shifted in relation to the through holes **5**, which are partially covered by the material of the regulating strip, so the passage of the air through the through holes is thereby limited. Figure 3c shows a situation in which the passage of air is even more limited than in Figure 3b due to the position of the regulating strip. A further shifting of the regulating strip **3** would lead to a complete covering of the through holes **5** by the material of the regulating strip **3** and thus practically any exit of air through the through holes **5** would be prevented(not shown). In this embodiment, the size and location of the regulating holes in the regulating strip **3** corresponds to the size and location of the through holes **5** in the wall of the duct member **1**. But there are other possible variants, for example, when the regulating holes are larger than the through holes **5**. The guiding element **6** may also be the material of the wall **2** of the duct member **1**, which is folded back and sewn to the wall **2** so that a guiding socket is formed between the bending line and the sewing line. Guiding element **6** can also be a strip made of coarse mesh or for guiding the regulating strip a system of guiding elements **6** can be used which are formed by strips and which are arranged in parallel to each other and with a mutual distance. It is also possible to use as a guiding element **6** a strip provided with one common cut-out for the entire area in which the guiding element **6** abuts the system of the through holes **5** in the wall **2**, so none of the through holes **5** is covered by any part of the guiding element **6**.

According to an alternative (not shown) embodiment the guiding element is adapted to guide the regulating strip along the wall of the duct member in the direction lying in the plane of the transversal cross section of the duct member, so that the regulation of the amount of the distributed air is done by shifting the regulating strip along the wall of the duct member along a circle line (in the case of duct members with circular cross-section), or again along a straight line, but along a line, the projection of which is perpendicular to the longitudinal axis of the duct member (in case of duct members having a rectangular or a triangular cross section).

A second exemplary embodiment of the duct member according to the invention is the duct member **10** shown in Figure 4a and 4b, which is particularly suitable to be used as an end duct member and to be vertically suspended under a ceiling, for example, connected to a roof fan. The duct member **10** comprises a connecting part **11** for its connection to the inlet of the distributed air. The connecting part **11** is adjoined by a conical transition part **12** which is adjoined by an extended part **13**, which is blinded by a bottom **14.** All parts of the duct member **10** according to the second exemplary embodiment have a common longitudinal axis. The wall **22** of the extended part **13** comprises through holes **25.** These through holes **25** are preferably arranged in groups, especially in groups of vertical rows of the through holes **25,** preferably in groups of three to six vertical rows. According to an especially preferred exemplary embodiment shown in Figure 4a and 4b the through holes are arranged in six groups, each containing a pair of vertical rows of the through holes **25** and all of these groups are arranged mutually symmetrically to the longitudinal axis of the duct member **10** so as to have an equal mutual angular spacing. If there were more groups, then the angle between them would be small and that would lead to connection of the flows (for example, there would not be 8 streams, but only 4). An angle of 60 ° between the groups is thus optimal and it allows formation of six independent airflows.

The extended part of the duct member **10** is provided with the guiding elements **6** for guiding the regulating elements, in this case, the regulating strips **3.** According to the exemplifying embodiment shown in Figure 4a and 4b a regulating strip **3** is assigned to each group of the through holes **25,** the regulating strip **3** comprising regulating holes, the location of which corresponds to the location of the through holes **25** in the respective group of holes. The regulating strip **3** is arranged in respect to the wall **22** movably in the longitudinal direction of the duct member **10,** so that the regulating holes may be shifted in relation to the through holes **25** so as to be aligned fully with them (full passage of air), to be aligned with them partially (limited passage of air) or not to overlap at all (closure of through holes). The guiding of each regulating strip **3** is provided in this case in the following way: handling strips **27** are fastened to the corners of the regulating strip **3**, the handling strips **27** extending in the longitudinal direction thereof, while the regulating strip **3** is arranged adjacent to the inner side of the wall **22,** the wall **22** is provided with cuts **28,** or with the guiding holes, through which are the handling strips **27** extend, and the handling strips **27** are provided with locking elements, such as velcro, at their free ends. In this case, the guiding elements are basically four cuts **28** in the wall **22.** To control the amount of air passing through the corresponding group of through holes **25,** the regulating strip **3** is shifted using the handling strips **27** to the desired position in relation to the through holes **25,** and then its position gets locked by folding the handling strips **27** the ends of which are provided with velcro and by attaching the same to a complementary element of velcro on the outer side of the wall **22** of the duct member **10.** To ensure that the regulating strip **3** will always fit closely to the wall **22,** it may be preferable to use similar guiding elements **6** as those used according to the first exemplary embodiment, that is for example in the form of an added inner layer of material for providing a guiding socket.

The handling strips **27** can be replaced by other handling elements, or it might be sufficient if the regulating strip **3** is long enough to extend beyond the guiding socket, to make a manipulation thereof possible when its position is to be adjusted and locked in the set position.

From an aesthetic and functional point of view it is advantageous to provide the extended section **13** with fixing cuffs **26** at both ends, wherein the fixing cuffs **26** can be turned from the setting position (in which the fixing cuffs **26** are lifted from the wall **22,** Figure 4a) into the working position (in which they abut on the wall **22,** Figure 4b). In both cases, it is basically a strip attached to the end of the extended part **13** so as to form a continuation of the cylindrical wall **22,** and this strip can be, after setting the position of the regulation strip **3**, turned into a position in which it is adjacent to the outer side of the wall **22** and covers the ends of the handling strips **27.** So in operation, the handling strips **27** are hidden by said fixing cuff **26,** which not only increases the aesthetics of the duct member **10,** but also contributes to a better locking of the position of the handling strips **27** and thus of the regulating strip **3** as well. The velcro fasteners and similar locking elements that are on the handling strips **27** can have their complementary elements arranged on the wall **22** or on the fixing cuff **27.**

Air is supplied to the duct member **10** from above with a certain speed. Had the duct member **10** a cylindrical shape without the extension, the air would exit through the through holes in a slant direction, which is not desirable in many cases. It is rather required that the air exits the through holes **25** in a radial direction, in case the duct member **10** is suspended in a vertical position, the air exits in a horizontal direction. This is achieved by providing the duct member **10** with an extended part, preferably so that the connecting part **11** is followed by a conical transition part **12** which is followed by the extended cylindrical part **13.** The conical transition from the connecting part **11** to the extended part **13** ensures that no excessively undesirable drop of air pressure occurs in the extended part. Increasing the diameter of the duct member **10** significantly reduces the vertical air speed so that the horizontal directional component of flow predominates. The extension also allows a better incorporation of the regulating strips **3**.

It is obvious that even such duct member end does not have to be cylindrically shaped, there may be a rectangular or a polygonal cross section of the connecting part and / or of the extended part.

Although as shown in the exemplary embodiments the guiding element **6** is arranged inside the duct member **1,** it is obvious that it can also be arranged at its outer side.

To lock the regulating strip **3** is in the selected position, it is possible to provide the regulating strip **3** and the adjacent wall **2** of the duct member **1** and / or of the guiding element **6** with a locking element, such as complementary elements of velcro. Preferably, the locking element at the duct member **1** is arranged near to the entry into the guiding socket, and at the regulating strip **3** at its end(s).

### Industrial applicability

Air ducts comprising the duct member **1** allowing regulation of passage of air through the perforation, according to this invention are industrially applicable for all installations for which it is not possible to define the flow precisely in advance due to the local conditions, or where it is appropriate to adjust the amount of the distributed air to the current needs.

## Claims

1. A duct member (1,10) for air transportation and distribution, which comprises a wall (2,22) made of woven or nonwoven fabric or foil, wherein the wall is provided with a system of through holes (5,25) for air passage, **characterized in that** it further comprises at least one guiding element (6) for guiding a regulating strip (3) along at least some of the holes (5, 25) of the system for regulating the amount of the air distributed through the through holes (5, 25) and wherein the guiding element (6) is formed by a guiding strip, that is attached inside or outside of the duct member (1, 10) to the wall (2, 22) of the duct member (1, 10) so that it forms a longitudinal guiding socket for guiding the movement of the regulating strip (3) in the longitudinal direction of the duct member (1, 10).

2. The duct member (1, 10) according to claim 1, **characterized in that** the guiding strip is made of a permeable or perforated or mesh material.

3. The duct member (1, 10) according to claim 1 or 2, **characterized in that** it further comprises a regulating strip (3) arranged movably in the longitudinal direction of the duct member (1, 10) between the wall (2, 22) and the guiding element (6), wherein the regulating strip (3) comprises regulating holes.

4. The duct member (1, 10) according to claim 3, **characterized in that** the regulating holes are arranged in the regulating strip (3) such that at least in one position of the regulating strip (3) in respect to the wall (2, 22) of the duct member (1 , 10) the regulating holes are aligned with the through holes (5, 25).

5. The duct member (1, 10) according to claim 3 or 4, **characterized in that** the regulating strip (3) and / or the guiding element (6) and / or the wall (2, 22) of the duct member are provided with at least one locking element for locking the position of the regulating strip (3) in respect to the wall (2, 22) of the duct member (1, 10).

6. The duct member (1, 10) according to claim 5, **characterized in that** the locking element is velcro.

7. The duct member (10) according to any of claims 1 to 6, **characterized in that** it comprises a connecting part (11) for its connection to an air inlet and an extended part (13), in which through holes (25) are arranged and which is closed by a bottom (14) at a side opposite to the connecting part (11).

8. The duct member (10) according to claim 7, **characterized in that** a conical transition part (12) is arranged between the connecting part (11) and the extended part (13).

9. The duct member (10) according to claim 7 or 8, **characterized in that** the through holes are arranged in four to six groups, each of which comprises two rows of through holes (25) the rows extending in the longitudinal direction of the duct member (10), and the groups have an even mutual angular spacing.

10. The duct member (10) according to any of claims 7 to 9, **characterized in that** the extended part (11) is at both of its ends provided with a fixing cuff (26), which may be turned from a working position in which it is adjacent to the wall (22) of the duct member (10), to a setting position in which it is lifted from the wall (22) of the duct member (10), and vice versa.

11. The duct member (1, 10) according to any of claims 3 to 10, **characterized in that** the regulating strip (3) is at its ends provided with handling strips (27) for handling the regulating strip (3) when adjusting its position.

## Patentansprüche

1. Rohrleitungsbauteil (1, 10) zur Beförderung und Verteilung von Luft, welcher Bauteil eine aus einer gewebten oder ungewebten Textilie oder einer Folie hergestellte Wand (2, 22) umfasst, wobei die Wand mit einer Mehrzahl von als Luftdurchlässe vorgesehenen Durchgangsöffnungen (5, 25) versehen ist, **dadurch gekennzeichnet, dass** er ferner zumindest ein Führungselement (6) zur Führung eines Regulierstreifens (3) entlang zumindest einiger von der Mehrzahl von Durchgangsöffnungen (5, 25) umfasst, um derart die Regulierung der Menge der durch die Durchgangsöffnungen (5, 25) zu verteilenden Luft zu bewerkstelligen, wobei das Führungselement (6) von einem Führungsstreifen gebildet ist, der innerhalb oder außerhalb des Rohrleitungsbauteils (1, 10) an der Wand (2, 22) des Rohrleitungsbauteils (1, 10) derart angebracht ist, dass er eine längliche Führungsfassung zur Führung der Bewegung des Regulierstreifens (3) in der Längsrichtung des Rohrleitungsbauteils (1, 10) ausbildet.

2. Rohrleitungsbauteil (1, 10) nach Anspruch 1, **dadurch gekennzeichnet, dass** der Führungsstreifen aus einem durchlässigen, gelochten oder siebartigen Werkstoff hergestellt ist.

3. Rohrleitungsbauteil (1, 10) nach Anspruch 1 oder 2, **dadurch gekennzeichnet, dass** er ferner einen Regulierstreifen (3) umfasst, der in dem Bereich zwischen der Wand (2, 22) und dem Führungselement (6) angeordnet ist, in welchem Bereich er beweglich in der Längsrichtung des Rohrleitungsbauteils (1, 10) ist, wobei der Regulierstreifen (3) mit Regulieröffnungen versehen ist.

4. Rohrleitungsbauteil (1, 10) nach Anspruch 3, **dadurch gekennzeichnet, dass** die Regulieröffnungen in dem Regulierstreifen (3) derart angeordnet sind, dass sie bei zumindest einer der von dem Regulierstreifen (3) gegenüber der Wand (2, 22) des Rohrleitungsbauteils (1, 10) aufgenommenen Stellungen koaxial zu den Durchgangsöffnungen (5, 25) ausgerichtet sind.

5. Rohrleitungsbauteil (1, 10) nach Anspruch 3 oder 4, **dadurch gekennzeichnet, dass** der Regulierstreifen (3) und/oder das Führungselement (6) und/oder die Wand (2, 22) des Rohrleitungsbauteils mit zumindest einem Verriegelungselement versehen ist, das zur Verriegelung der von dem Regulierstreifen (3) gegenüber der Wand (2, 22) des Rohrleitungsbauteils (1, 10) aufgenommenen Stellung vorgesehen ist.

6. Rohrleitungsbauteil (1, 10) nach Anspruch 5, **dadurch gekennzeichnet, dass** das Verriegelungselement von einem Klettverschluss gebildet ist.

7. Rohrleitungsbauteil (10) nach einem der Ansprüche 1 bis 6, **dadurch gekennzeichnet, dass** er einen Anschlussteil (11) zum Anschließen des Rohrleitungsbauteils an einen Lufteinlass sowie einen Erweiterungsteil (13) umfasst, wobei der letztere Teil mit Durchgangsöffnungen (25) versehen und mit einem an der dem Anschlussteil (11) gegenüberliegenden Seite angeordneten Boden (14) geschlossen ist.

8. Rohrleitungsbauteil (10) nach Anspruch 7, **dadurch gekennzeichnet, dass** zwischen dem Anschlussteil (11) und dem Erweiterungsteil (13) ein kegelartiger Übergangsteil (12) angeordnet ist.

9. Rohrleitungsbauteil (10) nach Anspruch 7 oder 8, **dadurch gekennzeichnet, dass** die Durchgangsöffnungen in Gruppen angeordnet sind, die je vier bis sechs Öffnungen umfassen, wobei jede der Gruppen aus zwei Reihen der Durchgangsöffnungen (25) besteht, die sich in der Längsrichtung des Rohrleitungsbauteile (10) erstrecken, und wobei die Gruppen in einem gleichmäßigen gegenseitigen Winkelabstand angeordnet sind.

10. Rohrleitungsbauteil (10) nach einem der Ansprüche 7 bis 9, **dadurch gekennzeichnet, dass** der Erweiterungsteil (13) an jedem seiner Endabschnitte mit einem Befestigungskragen (26) versehen ist, der drehbeweglich zwischen einer Arbeitsstellung, in der er an die Wand (22) des Rohrleitungsbauteils (10) angrenzt, und einer Einrichtstellung, in der er von der Wand (22) des Rohrleitungsbauteils (10) beabstandet ist, und umgekehrt, verstellbar ist.

11. Rohrleitungsbauteil (1, 10) nach einem der Ansprüche 3 bis 10, **dadurch gekennzeichnet, dass** der Regulierstreifen (3) in seinen Endabschnitten mit Handhabungsstreifen (27) versehen ist, die zur Handhabung des Regulierstreifens (3) beim Einstellen seiner Stellung vorgesehen sind.

## Revendications

1. L'élément (1, 10) de conduit pour le transport et la distribution d'air, qui comprend une paroi (2, 22) faite de tissu tissé ou non tissé ou de la feuille tissée ou non tissée, la paroi étant pourvue d'un système de trous (5, 25) de passage pour le passage de l'air, **caractérisé en ce qu'**il comprend en outre au moins un élément (6) de guidage pour guider une bande (3) de réglage le long d'au moins certains des trous (5, 25) du système de réglage de la quantité de l'air distribuée à travers les trous (5, 25) de passage et dans lequel l'élément (6) de guidage est formé par une bande de guidage qui est fixée à l'intérieur ou à l'extérieur de l'élément (1, 10) de conduit à la paroi (2, 22) de l'élément (1, 10) de conduit de sorte qu'elle forme un tube de guidage longitudinale pour guider le mouvement de la bande (3) de réglage dans la direction longitudinale de l'élément (1, 10) de conduit.

2. L'élément (1, 10) de conduit selon la revendication 1, **caractérisé en ce que** la bande de guidage est constituée d'un matériau perméable ou perforé ou maillé.

3. L'élément (1, 10) de conduit selon la revendication 1 ou 2, **caractérisé en ce qu'**il comprend en outre une bande (3) de réglage disposée de manière mobile dans la direction longitudinale de l'élément (1,10) de conduit entre la paroi (2, 22) et l'élément (6) de guidage, la bande (3) de réglage comprenant des trous de réglage.

4. L'élément de conduit (1, 10) selon la revendication 3, **caractérisé en ce que** les trous de réglage sont agencés dans la bande (3) de réglage de telle sorte qu'au moins dans une position de la bande (3) de réglage par rapport à la paroi (2, 22) de l'élément (1, 10) de conduit, les trous de réglage sont alignés avec les trous (5, 25) de passage.

5. L'élément (1, 10) de conduit selon la revendication 3 ou 4, **caractérisé en ce que** la bande (3) de réglage et / ou l'élément (6) de guidage et / ou la paroi (2, 22) de l'élément de conduit sont pourvus d'au moins un élément de verrouillage pour bloquer la position de la bande (3) de réglage par rapport à la paroi (2, 22) de l'élément (1,10) de conduit.

6. L'élément (1, 10) de conduit selon la revendication 5, **caractérisé en ce que** l'élément de verrouillage est de type velcro.

7. L'élément (10) de conduit selon l'une quelconque des revendications 1 à 6, **caractérisé en ce qu'**Il comprend une partie (11) de raccordement pour raccorder celui-ci à une entrée de l'air et une partie (13) prolongée, dans laquelle des trous (25) de passage sont agencés et qui est fermée par un fond (14) à un côté opposé à la partie (11) de raccordement.

8. L'élément (10) de conduit selon la revendication 7, **caractérisé en ce qu'**une partie (12) de transition conique est disposée entre la partie (11) de raccordement et la partie (13) prolongée.

9. L'élément (10) de conduit selon la revendication 7 ou 8, **caractérisé en ce que** les trous de passage sont disposés en quatre à six groupes, dont chacun comprend deux rangées de trous (25) de passage, les rangées s'étendant dans la direction longitudinale de l'élément (10) de conduit, et les groupes ont un espacement angulaire mutuel uniforme.

10. L'élément (10) de conduit selon l'une quelconque des revendications 7 à 9, **caractérisé en ce que** la partie (11) prolongée est à ses deux extrémités pourvue d'une manchette (26) de fixation qui peut être tournée d'une position de travail, dans laquelle elle est adjacente à la paroi (22) de l'élément (10) de conduit, dans la position de réglage dans laquelle elle est soulevée de la paroi (22) de l'élément (10) de conduit, et inversement.

11. L'élément (1, 10) de conduit selon l'une quelconque des revendications 3 à 10, **caractérisé en ce que** la bande (3) de réglage présente à ses extrémités des bandes (27) de manutention pour manipuler la bande (3) de réglage pendant le réglage de sa position.
